# EUROPEAN PATENT SPECIFICATION

(11) **EP 2 156 640 B1**
(45) Date of publication and mention of the grant of the patent: **13.05.2015**
(21) Application number: 07765435.8
(22) Date of filing: 14.06.2007
(51) Int. Cl.: H04L 29/06

(54) **PROXY BINDING MANAGEMENT IN MOBILE IP NETWORKS**
PROXY-BINDEVERWALTUNG IN MOBIL-IP-NETZEN
GESTION DE LIAISON PAR PROXY DANS DES RÉSEAUX IP MOBILES

(43) Date of publication of application: 24.02.2010
(73) Proprietor: Telefonaktiebolaget LM Ericsson (publ), 164 83 Stockholm (SE)
(72) Inventor: SUGIMOTO, Shinta, Kanagawa (JP); KATO, Ryoji, Kanagawa 239-0829 (JP); ODA, Toshikane, Tokyo 150-0012 (JP)
(74) Representative: White, Duncan Rohan
(86) International application number: PCT/EP2007/055927
(87) International publication number: WO 2008/151671

(56) References cited:
- WO-A-03/096588
- US-A1- 2004 100 951
- US-A1- 2004 213 260
- US-A1- 2005 044 362

## Description

### Technical Field

The invention relates to the field of binding management in Mobile IP networks.

### Background

Mobile IP (MIP), which is described in IETF RFC 3344, allows users of mobile communications devices to move from one network to another whilst maintaining a permanent IP address, regardless of which network they are in. This allows a user to maintain connectivity whilst on the move. For example, if a user were participating in a Voice Over IP (VoIP) session, during they may move from one network to another. Without MIP support, the user's IP address may change, which would lead to problems with the VoIP session.

A Mobile Node (MN) is allocated two IP addresses: a permanent home address and a care-of address (CoA). The CoA is associated with a node in the network that the user is currently visiting. To communicate with the MN, packets are sent to the MN home address. These packets are intercepted by a Home Agent in the home network, which has knowledge of the current CoA. The Home Agent then tunnels the packets to the CoA of the MN with a new IP header, whilst preserving the original IP header. When: the packets are received by the MN, it removes the new IP header and obtains the original IP header. The MN sends packets directly to another node via a foreign agent in the visited network. The foreign agent maintains information about visiting MNs, including the CoA of each visiting MN.

Proxy Mobile IPv6 (PMIPv6), IETF draft-sgundave-mip6-proxymip6-01, describes a Proxy Mobile Agent (PMA) function. This function emulates home link properties in order to make a MN behave as though it is on its home network and allows support for mobility on networks that would not otherwise support MIPv6.

A PMA is usually implemented at the access router. The PMA sends and receives mobility related signalling on behalf of a MN. When a MN connects to an access router having a PMA, the MN presents its identity in the form of a Network Access Identifier (NAI) as part of an access authentication procedure. Once the MN has been authenticated, the PMA obtains the user's profile from a policy store. The PMA, having knowledge of the user profile and the NAI, can now emulate the MN's home network. The MN subsequently obtains its home address from the PMA. The PMA also informs the MN's Home Agent of the current location of the MN using a Binding Update message. The Binding Update message uses the NAI of the MN. Upon receipt of the Binding Update message, the Home Agent sets up a tunnel to the PMA and sends a binding acknowledgement to the PMA. On receipt of the Binding Acknowledgement, the PMA sets up a tunnel to the Home Agent. All traffic from the MN is routed to the Home Agent via the tunnel.

The Home Agent receives any packet that is sent to the MN, and forwards the received packet to the PMA through the tunnel. On receipt of the packet, the PMA removes the tunnel header and sends the packet to the MN. The PMA acts as a default router on the access link. Any packets sent from the MN are sent via the PMA to the Home Agent, which then sends the packet on to its ultimate destination.

In Proxy Mobile IP (PMIP) networks, it is assumed that the functionalities of Client Mobile IP (CMIP) and PMIP co-exist on the MN. This is because, in the early stages of introducing PMIP technology, there will not be wide deployment of PMIP networks.

On the MN, the mode of IP mobility management may alternatively be switched between CMIP and PMIP modes depending on which of PMIP or non-CMIP domain networks the MN is connected to. When the MN visits a PMIP network, it delegates handling of mobility signaling to the proxy mobile agent (PMA), while it handles mobility management by itself when visiting a normal IP network.

No Route Optimization (RO) mechanism is specified in PMIPv6 at present. It is a natural extension to the functionality of the PMA to implement RO features by re-using the mechanism specified in MIPv6. The route optimization mechanism in MIPv6 is designed in a way that an optimization could be applied between nodes in each direction separately. A node therefore has the capability of registering binding information of the node itself to its peer, and also the capability of accepting binding registrations from the peer. The former capability is termed herein "correspondent binding registration", and the latter capability is termed herein "correspondent binding reception".

A node must maintain a record of correspondent binding registration in order that it may update the binding stored in the peer's binding cache after the node moves between networks. The record is called the Binding Update List (BUL). The BUL is referred to when the host sends route optimized outgoing packets. On the other hand, in order to receive route optimized incoming packets, a node must maintain the binding information in a database, termed a Binding Cache (BC). The combination of the BUL and the BC for a given MN is termed herein "mobility context".

According to MIPv6, a node that has the capabilities of both a MN and a Correspondent Node (CN) maintains the mobility context, while in PMIPv6, a MN is not required to maintain any mobility context. Allowing a PMA to serve as a proxy for the MN gives rise to several problems.

Where a MN moves from a PMIP domain to a CMIP domain, the following problems can prevent smooth transition of the mobility context information:
- The MN has no information about the mobility context because the PMA has solely performed correspondent binding registration and correspondent binding reception on behalf of the MN in the PMIP domain.
- The PMA may not be able to detect departure of a MN from the network.

Where a MN moves from a CMIP domain to a PMIP domain, the following problems arise:
- The PMA receives no information about the mobility context because the MN has performed correspondent binding registration and correspondent binding reception by itself in the CMIP domain.
- It may be difficult for the MN to detect that it has moved to a given PMIP domain because the MN may consider the subnet as the MN's normal home network. Note that, as described above, PMIP is designed in a way that the PMA emulates the home network for a given MN by advertising home prefix in a router advertisement message.

There are at least two possible approaches to overcome these problems. A first approach is to define an explicit mechanism to transfer the mobility context information between the MN and the PMA. However, defining a mechanism for explicit context transfer increases complexity of the protocol procedure to be performed by PMA and MN. A second approach is to provide an entity that solely maintains the mobility context for a given MN, regardless of the type of network domain (CMIP or PMIP) to which the MN is connected.

EP 1445915 describes a system and method for route optimization in a wireless internet protocol network. The basic concept is to maintain a BUL at a Home Agent (HA) and send mobility signalling messages from the HA to the CN on behalf of the MN. This is one way to solve the problem of maintaining a BUL in the situation where a MN roams between CMIP and PMIP networks. However, some problems remain that are not addressed by this document.

In order for the MN to create a correspondent binding entry at the CN, the MN must to provide evidence to the CN, at the time of sending a BU message, proving that the MN is actually the node that performed the return routability procedure prior to registration. In normal cases, there is no trust relationship between the CN and MN, and thus a return routability procedure must be performed in order for the CN to verify that the MN is actually reachable with its claimed addresses, namely the MN's home address and care-of address. A standard MIPv6 CN only accepts a BU message with valid Binding Auth Data, which can be calculated using keygen tokens generated by a home test and care-of test. EP 1445915 does not provide any mechanism or solution for fulfilling these security requirements, and so it is not technically feasible for the HA to send BU message to the CN on behalf of the MN.

Furthermore, according to EP 1445915, the MN maintains the BUL and informs of the HA about entries in the BUL. However, this approach is not feasible in the case where the MN moves from CMIP to PMIP domain network.

US 2005/0044362 describes a HA sending a plurality of binding updates to a plurality of peer nodes on behalf of a MN to several CNs, but requires the MN to be in control of its mobility signalling and does not consider the case of receiving Bus destined for the MN.

### Summary

According to the invention, the role of the Home Agent (HA) is extended to allow it to serve as a proxy for the Mobile Node (MN) for maintenance of mobility context information as well as handling relevant mobility signalling messages, without bringing further security vulnerability to the Internet. This can be achieved by allowing the HA to send mobility management signals on behalf of the MN (or any other entity which serves as a proxy for the MN) using the credentials provided by the MN. The HA maintains stateful information of correspondent binding registration and correspondent binding reception for a given MN. This allows the MN to roam freely between CMIP and PMIP networks, without requiring a mobility context transfer mechanism.

The HA may perform part of a return routability procedure, that is to say, a home test on behalf of the MN. At the same time, taking advantage of the request and response message exchange required for the home test, the HA may evaluate the transmission cost on the path between the HA and CN by some means, for instance, by performing a Round Trip Time (RTT) measurement.

The MN can perform a return routability check with its CN and provide the results to the HA using secure mobility signalling messages. Furthermore, taking advantage of the request and response message exchange required for a care-of test, the MN may evaluate the transmission cost on the path by some means, for instance, by performing a RTT measurement on the path between the MN and CN.

By receiving the results of a care-of test from the MN, the HA may send a request message for correspondent binding registration to the CN. In addition, the HA may decide whether or not to activate route optimization for a given correspondent node of the MN, based on the evaluation of the transmission cost of relevant paths between the CN and HA, HA and MN, and MN and CN, respectively. The evaluation can be made by any suitable means including RTT measurement during the return routability procedure. In this way, the HA can selectively perform route optimization on behalf of the MN.

According to a first aspect of the invention, there is provided a method of managing binding information, on behalf of a Mobile Node, at a Home Agent in a Mobile IP network. A record of Correspondent Binding Reception and Correspondent Binding Registration is maintained at the Home Agent. The Correspondent Binding Reception record comprises a Home Address of the Mobile Node and a Care-of-Address of a Correspondent Node, and the Correspondent Binding Reception record comprises an IP address of the Correspondent Node and security credentials authenticating that the Home Agent can act on behalf of the Mobile Node. In the event that the Home Agent receives a Binding Update message on behalf of the Mobile Node, the Care of address of the Correspondent Node in the Correspondent Binding Reception record is updated. In the event that the Home Agent sends a Binding Update message on behalf of the Mobile Node, it is sent using the security credentials stored in the Correspondent Binding Reception record.

The method may further comprise, at the Home Agent, activating Route Optimization for user data packets sent between the Mobile Node and the Correspondent Node.

In some embodiments of the invention, the method comprises maintaining at the Home Agent a Correspondent Node List, the Correspondent Node List comprising information selected from any of an IP address of a Correspondent Node, Route Optimization information, authorization information. The Correspondent Node List can then be transmitted to a node selected from the Mobile Node and a Proxy Mobile Agent by piggybacking the information into existing signalling message.

The method may include receiving, at the Home Agent, the results of a Return Routability Test between the Mobile Node, a Correspondent Node, a Proxy Mobile Agent acting on behalf of the Mobile Node, or a Correspondent Node. On the basis of the results, the Home Agent can determine whether to perform Route Optimization.

The two nodes may be selected from any of the Mobile Node and a Correspondent Node, a Proxy Mobile Agent acting on behalf of the Mobile Node and the Correspondent Node, the Home Agent and the Correspondent Node, the Home Agent and a Proxy Mobile Agent, and the Home Agent and the Mobile Node.

In this case, the Round Trip Time may be measured during a procedure selected from any of:
a Care-of Test procedure between the Mobile Node and the Correspondent Node;
a Care-of Test procedure between the Proxy Mobile Agent acting on behalf of the Mobile Node and the Correspondent Node;
a Home Test procedure between the Home Agent and the Correspondent Node, a Home Registration procedure between the Home Agent and the Correspondent Node;
a Proxy Home Registration procedure between the Home Agent and the Proxy Mobile Agent; and
a Home Registration procedure between the Home Agent and the Mobile Node.

Tthe Home Agent may respond to the Return Routability Test request messages using the security credentials stored in the Correspondent Binding Reception record.

The results of the Return Routability Test may be sent from the Mobile Node to the Home Agent in a message comprising a Care-of Keygen Token, and a measured Round Trip Time measured between the Mobile Node and the Correspondent Node.

Depending on whether the Mobile Node is acting on its own behalf, or whether a Proxy Mobile Agent is acting on behalf of the Mobile Node, the security credentials used will be either the security credentials of the Mobile Node or the security credentials of the Proxy Mobile Agent.

In the case where the Mobile Node is communicating with a Correspondent Node in a Proxy Mobile IP network, the Home Agent may query a database to obtain an identity of a Proxy Mobile Agent serving the Correspondent Node.

User data packets are preferably processed in a route optimized manner using a Routing Header Type 2 and a Home Address Destination Option.

According to a second aspect of the invention, there is provided a Home Agent for use in a Mobile IP network, the Home Agent comprising:
a memory for storing a record of Correspondent Binding Reception and Correspondent Binding Registration, the Correspondent Binding Reception record comprising a Home Address of a Mobile Node for which the Home Agent is acting and a Care-of-Address of a Correspondent Node, and the Correspondent Binding Reception record comprising an IP address of the Correspondent Node and security credentials authenticating that the Home Agent can act on behalf of the Mobile Node;
a receiver for receiving a Binding Update message on behalf of the Mobile Node
means for updating the Care of address of the Correspondent Node in the Correspondent Binding Reception record; and
a transmitter for transmitting a Binding Update message on behalf of the Mobile Node, the message using the security credentials stored in the Correspondent Binding Reception record.

The term "peer node" is used to denote either a Correspondent Node or any node that is acting on behalf of the Correspondent Node.

### Brief Description of the Drawings

Figure 1 is a flow chart showing the basic steps of an embodiment of the invention;
Figure 2 illustrates schematically the movement of a Mobile Node from a PMIP network to a CMIP network;
Figure 3 illustrates schematically the movement of a Mobile Node from a CMIP network to a PMIP network;
Figure 4 illustrates schematically proxy correspondent binding reception when a Mobile Node attaches to a CMIP network;
Figure 5 illustrates schematically proxy correspondent binding reception when a Mobile Node attaches to a PMIP network;
Figure 6 illustrates schematically route optimization in a PMIP network; and
Figure 7 illustrates schematically a Home Agent according to an embodiment of the invention.

### Detailed Description

Referring to Figure, a Home Agent HA maintains 1 a Correspondent Binding Reception and Correspondent Binding Registration. Where the HA receives 2 a Binding Update on behalf of a Mobile Node, it updates 3 the Care-of-Address of the Correspondent Node, and when the HA sends 4 Binding Update on behalf of the Mobile Node, it sends the Binding Update using security credentials stored in the Correspondent Binding Reception record.

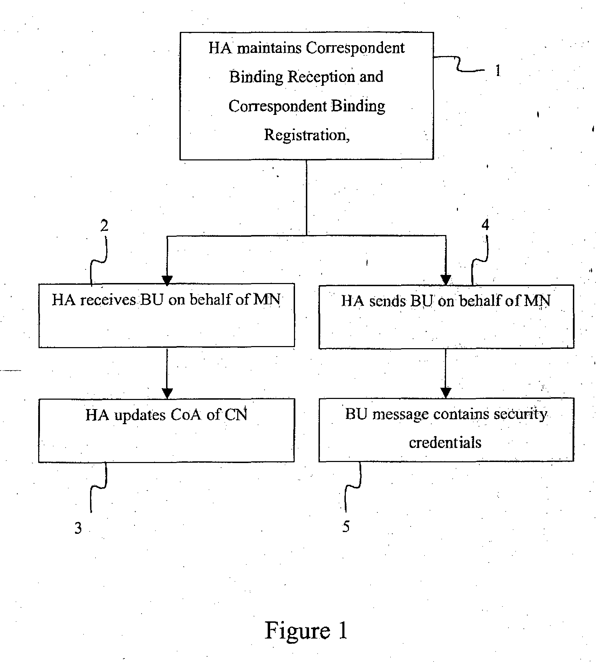

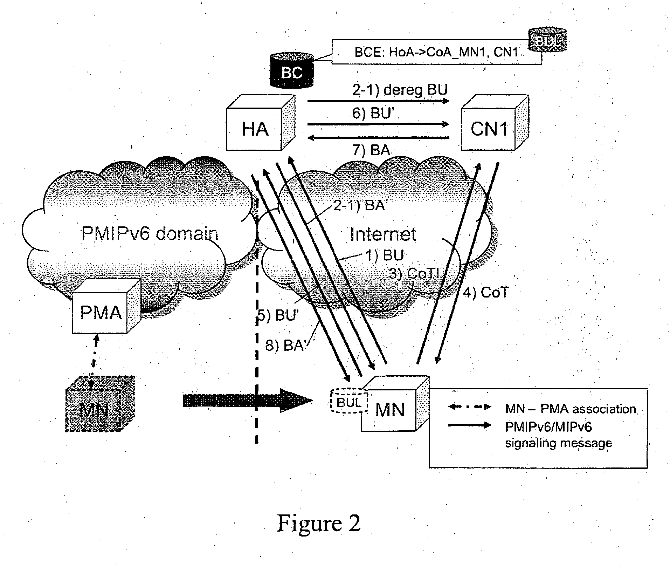

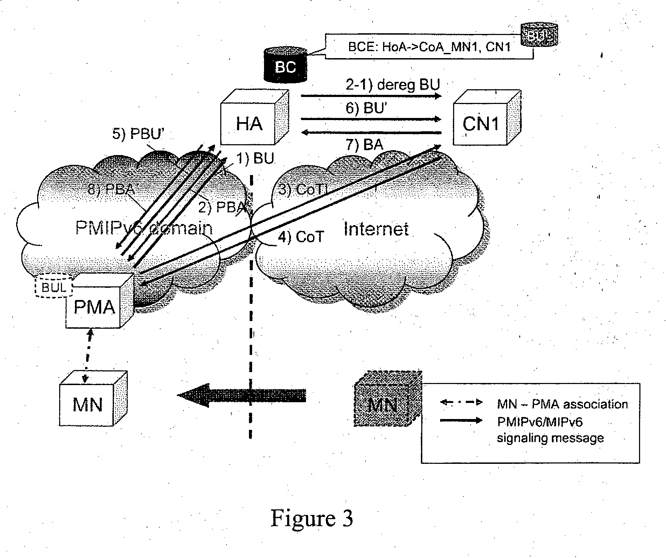

Referring to Figure 2, when a MN moves from a PMIP network to a CMIP network, a the HA performs proxy correspondent binding registration by sending a correspondent Binding Update (BU) message to the CN on behalf of the Mobile Node (MN). Figures 2 and 3 illustrate the movement of a Mobile Node (MN) between a PMIP network and a CMIP network when a proxy correspondent binding registration is performed by a Home Agent (HA).
1. The MN detects that it has moved from a PMIP to a CMIP network and sends a home registration Binding Update message to the HA.
2. The HA receives the home registration Binding Update message from the MN and verifies the message. The HA checks its Binding Cache to see if there is a matching entry for the MN, and updates the CoA in the Binding Cache. The HA also checks the Correspondent Node list in the Binding Cache information to see if deregistration is needed immediately.
   If immediate deregistration is considered necessary, the HA sends a deregistration Binding Update message (BU') to the Correspondent Node (CN), designated CN in Figure 1.
   The HA sends a Binding Acknowledgement (BA') message to the MN. The BA' message contains information which includes a list of Correspondent Nodes to which the MN should initiate return routability procedure. In the example of Figure 1, the MN also performs a return routability procedure with CN 1.
3. The MN performs a care-of test by sending Care-of Test Init (CoTI) message to the CN. The MN records a timestamp upon transmission of the Care-of Test Init message.
4. The MN receives a Care-of Test (CoT) message from the CN. The MN again records a timestamp upon receipt of the CoT message. Round Trip Time (RTT) is determined on the basis of the two timestamps. Note that in one embodiment, the care-of test (steps 3 and 4) can be performed in parallel with home registration (steps 1 and 2), which can reduce the latency between steps 3 and 5.
5. The MN sends another Binding Update message (BU') to the HA. The BU' contains the results of the care-of test, namely the set of care-of test results including the result of the RTT measurement. BU' is protected by Encapsulation Security Payload (ESP) header, and so confidentiality of the information carried by the message is assured.
6. The HA verifies the results of the RTT measurements, and the paths between HA - CN, HA - MN, and CN - MN. The HA evaluates the RTT of each path and decides if route optimization is beneficial for the MN. If the HA, on the basis of the evaluation, decides that route optimization is required, the HA sends a Binding Update message (BU') to CN 1. The BU' message is a normal correspondent Binding Update message except that the source address of the IPv6 header is set as the address of the HA, and the message contains an Alternative Care-of Address Option in which the MN's care-of address is stored.
7. The CN1 sends a Binding Acknowledgement to the HA (this step is optional). The Binding Acknowledgement is not sent back to the MN but rather to the HA, as the source address of the Binding Update is the address of the HA.

Referring to Figure 3, when a Mobile Node moves from a CMIP network to a PMIP network, the procedure is as follows:
1. After the MN moves into the PMIP network, it is authenticated in the network. once it has been authenticated, the Proxy Mobile Agent (PMA) sends a home registration Proxy Binding Update message to the HA.
2. The HA receives and verifies the home registration Proxy Binding Update message from the MN. The HA checks its Binding Cache to see if there is any matching entry for the MN and updates the CoA. The HA also checks the correspondent node list for the MN stored as part of Binding Cache information to see if deregistration is needed immediately.
   If immediate deregistration is required, the HA sends a deregistration Binding Update message (BU') to the Correspondent Node CN. The HA sends a Binding Acknowledgement (BA') message to the MN. The BA' contains information that indicates the necessity of the correspondent registration. In the example of Figure 2, it is indicated that the PMA should perform return routability procedure with CN 1.
3. The PMA performs a care-of test by a sending a CoTI message to the CN. The PMA records a timestamp upon transmission of the CoTI message.
4. In response to the CoTI message, the PMA receives a Care-of Test message from the CN. The PMA again records a timestamp upon the receipt of the COT message. RTT is determined on the basis of the two time stamps. As with the previous example of Figure 1, the care-of test (steps 3 and 4) can be performed in parallel with home registration (steps 1 and 2), which can reduce the latency between step 3 and 5.
5. The PMA sends a further Proxy Binding Update message (PBU') to the HA. The PBU' message contains the results of the care-of test, including the result of RTT measurement. As in Figure 1, the confidentiality of information carried by the PBU' message is assured using ESP.
6. The HA verifies the results of RTT measurements, and the paths between HA - CN, HA - PMA, and CN - PMA. The HA evaluates the RTT of each path and decides if route optimization is beneficial for the MN. If the decision is made to perform route optimization, the HA sends a Binding Update message (BU') to the CN1. The BU' is a normal correspondent Binding Update message, except that the source address of the IPv6 header is set as the address of the HA, and the message contains Alternative Care-of Address Option in which the MN's care-of address is stored.
7. The CN1 sends Binding Acknowledgement to the HA (optional). Note that the Binding Acknowledgement is sent back not to the MN but to the HA as the source address of the Binding Update was HA's address.

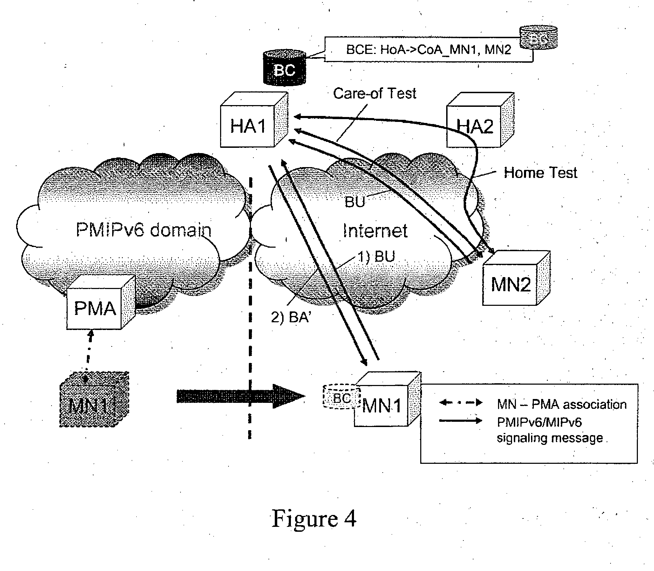

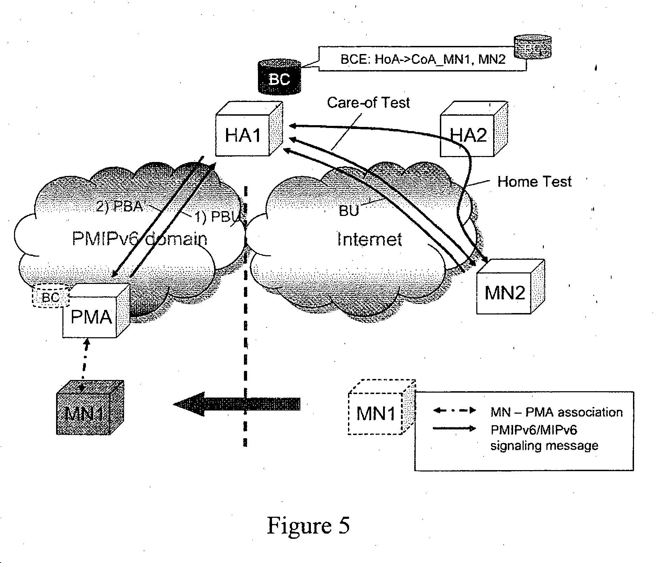

Figure 4 and 5 illustrate movement of a Mobile Node between a PMIP network and a CMIP network when a HA performs proxy correspondent binding reception. The HA performs proxy correspondent binding reception by receiving a correspondent BU message from the CN on MN's behalf.

Referring to Figure 4, the procedure of proxy correspondent binding reception when the MN moves from a PMIP network to a CMIP network is illustrated. In Figure 3, MN1 is served by HA1. MN2, which is a communicating peer with MN1, is served by HA2. HA1 responds to a correspondent binding registration from the MN2 on behalf of the MN1. Note that the Care-of Init message, Home Test Init message and BU messages are sent to the home address of MN1. Hence HA1 should be able to receive those messages and perform proxy correspondent binding reception on behalf of MN1.

The binding cache generated by correspondent binding reception is termed herein 'correspondent binding cache'. A correspondent binding cache is stored at an HA as part of binding cache entry for a given MN. Note that the creation of correspondent binding cache is permormed independently from the movement between networks of the MN that is served by the HA. However, when the MN moves from a PMIP network to a CMIP network, the HA explicitly informs the MN of the correspondent binding cache which is generated by the proxy correspondent binding reception. The procedure is as follows:
1. MN1 detects that it has moved from a PMIP network to a CMIP network, and accordingly sends a home registration Binding Update message to HA1.
2. HA1 receives and verifies the home registration Binding Update message from MN1. HA1 checks its Binding Cache to see if there is a matching entry for MN1 and updates the CoA. It also checks the correspondent binding cache. If there is any matching entry found, the HA includes the information in the Binding Acknowledgement message (BA') sent to MN1.
3. MN1 receives the BA' message and extracts the information from the correspondent binding cache contained in message BA'.

The correspondent binding cache information is referred to when MN1 receives a route optimized packet from its peer node (MN2). Note that such a route optimized packet could be received through a bi-directional tunnel or in a direct manner. In the MIPv6 specification, it is specified that when processing IP packet with Home Address Destination Option, the node must check its binding cache information and see if there is any matching entry. This verification is required for preventing impersonation where a malicious node pretends to be a given MN by claiming his home address.

The correspondent binding cache information is also referred to when MN1 sends an IP packet to the peer whose entry appears in the cache. As specified in MIPv6 specifcation, the MN can send an IP packet directly to the care-of address of the peer node by using Routing Header type 2.

The HA performs proxy correspondent binding reception by receiving correspondent BU message from the CN on MN's behalf. Figure 5 illustrates the procedure of proxy correspondent binding reception when the MN moves to a PMIP network. The procedure is similar to that described for Figure 3, except that the PMA in the PMIP network exchanges mobility signals with the HA. The procedure is as follows:
1. MN1 moves to the PMIP network, and is authenticated in that network. Once authentication has taken place, the PMA sends a home registration Proxy Binding Update message to HA1.
2. HA1 receives and verifies the home registration Proxy Binding Update message from the PMA. HA1 checks its Binding Cache to see if there is any matching entry for MN1 and updates the CoA. It also checks the correspondent binding cache. If there is any, HA1 includes the information in the Proxy Binding Acknowledgement message (PBA').
3. The PMA receives the PBA' message and extracts the correspondent binding cache information. The information is referred to when the PMA receives/sends route optimized packets sent between the peer node and MN 1.

Where the PMA receives route optimized packets destined for MN1, it processes the Home Address Destination Option and removes the extension header from the original IP packets. Where the PMA receives packets destined to a given peer node whose entry appears in the correspondent binding cache, the PMA inserts Routing Header Type 2 and swaps the source address and the address stored in the routing header (home address of the peer node) and transmits the packets directly to the peer.

In CMIP context, the MN must tear down the mobility context information provided by the HA when it detects returning home. This is the case where the MN is attached to PMIP network where the home prefix is advertised to the MN by the PMA.

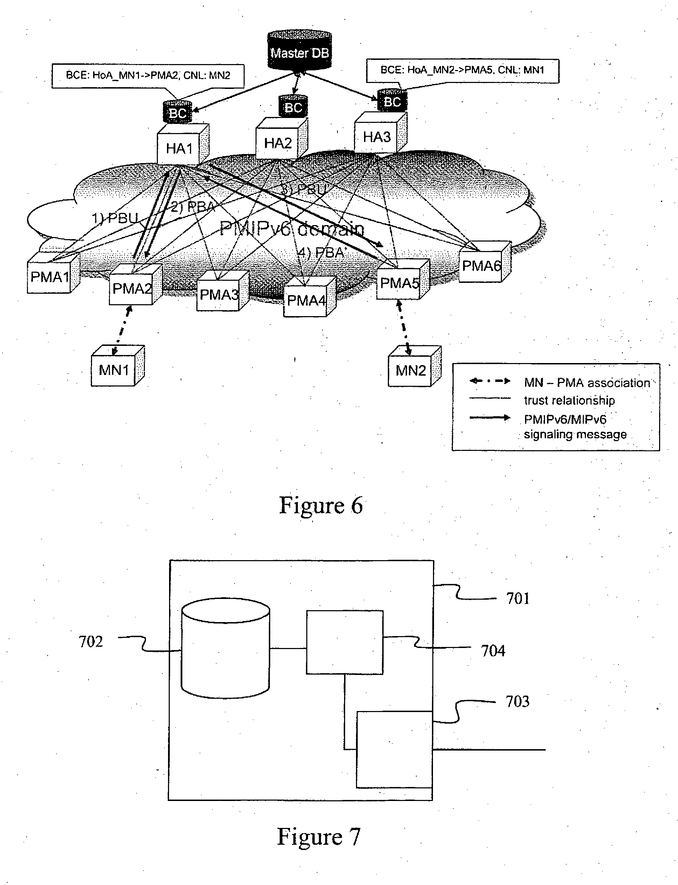

It is possible for a Mobile Node to move between two PMIP access networks, as illustrated in Figure 6. In this example, it is assumed that MN1 visits a subnet which is served by PMA2, and maintains a user session with its correspondent node MN2. MN2 is also a client of the PMIP network. MN2 is currently served by PMA5. MN1 and MN2 are served by HA1 and HA2, respectively. The procedure is as follows:
1. Once MN1 has been authenticated by the PMIP network PMA1 sends a home registration Proxy Binding Update message to HA1.
2. HA1 receives and verifies the home registration Proxy Binding Update message from MN1. HA1 checks its Binding Cache to see if there is any matching entry for MN1 and updates the CoA. It also checks the correspondent node list for MN1 stored as part of the Binding Cache information to determine whether deregistration is required immediately. In it is determined that deregistration is required, HA1 comes to know that the correspondent node serving MN2 is visiting the same PMIP domain. HA1 resolves the PMA of the correspondent node by referring to an additional database (shown as BC in Figure 5) which is periodically synchronized with the master database (shown as Master DB in Figure 5). The master database is a centrally managed database that stores all the binding information within a given PMIP domain. HA1 sends Binding Acknowledgement message (BA') to PMA2, which contains the correspondent binding information, namely the home address and care-of address of MN2. Note that the care-of address in this example is the address of PMA5.
3. HA1 sends a Proxy Binding Update message (PBU') to PMA5. The PBU' message is protected by pre-established security associations between HA1 and PMA5.
4. PMA5 sends back a Proxy Binding Acknowledgement (PBA') message to HA1 indicating that the PBU' message was successfully received.

As described above, the HA and MN conduct RTT measurements to estimate transmission delay on the paths between HA - CN, HA - MN, and CN - MN.

Return routability procedure is designed such that that the correspondent node remains stateless until it receives a BU message from the MN, and so it is reasonable to expect that the correspondent node will not take much time to process the request messages (Care-of Test Init and Home Test Init messages). The only procedure that the correspondent node must perform when it receives a Care-of Test Init or Home Test Init message is to calculate a Message Authentication Code, called a keygen token, which is calculated using a hash function (e.g. HMAC_SHA1).

Table 1 shows the 3 types of RTT values that are taken into account by the HA to decide whether route optimization for a given correspondent node for the MN is required. Specific algorithms for evaluating the RTT values are outside the scope of this invention, but an example of a simple algorithm is: "activate route optimization when the sum of RTT_{HA-CN} and RTT_{HA-MN} is considerably larger than RTT_{MN-CN}."

**Table 1: RTT values**

| | |
|---|---|
| RTT_{HA-CN} | Measured by HA during the home test. HA performs home test on behalf of the MN |
| RTT_{HA-MN} | Measured by HA during home registration. It is assumed that the MN and HA synchronize clocks |
| RTT_{MN-CN} | Measured by MN during care-of test. The result will be transferred to the HA being stored in Care-of Test Option |

Newly defined mobility options are also provided by the invention. These mobility options can be included in a Mobility Header message, which is defined in the Mobile IPv6 specification.

A Care-of Test option is a new mobility option that holds the results of a care-of test that the MN performed against the CN which appears in a Correspondent Node List (CNL) option provided by the HA, and it is included in a BU message to be sent by the MN/PMA to the HA. The Care-of Test Option includes following information:
- Care-of Init Cookie
- Care-of Keygen Token
- Care-of Nonce Index
- RTT (milliseconds)

A CNL option is a mobility option that holds a list of correspondent nodes of the MN, and it is included in a BA message to be sent by the HA to the MN/PMA. Each entry of the list contains the following information for each correspondent node in the list:
- IP address
- Direction of the route optimization enabled (either INBOUND or OUTBOUND or both)
- Mechanism of authorizing BU (e.g. Return Routability procedure)

A Correspondent Binding Information (CBI) option is a mobility option that holds a single binding information comprising a home address and care-of address for the CN, and is included in the PBA sent by the HA to the PMA. It comprises the following infromation:
- Home address (IPv6 address)
- Care-of address (IPv6 address)

Referring to Figure 7, a schematic diagram of a Home Agent according to an embodiment of the invention is shown. The Home Agent 701 comprises a memory 702 for storing a Binding Cache, a receiver 703 for receiving a Binding Update message, and a processor 704 for updating the data stored in the Binding Cache and for determining whether route optimization is required.

The invention as described above does not require any changes for peer nodes in terms of CN functionality. In other words, peer nodes can be standard MIPv6 CNs. The HA can send a correspondent Binding Update message to the peer node on behalf of the MN without security issue arising. Furthermore, no change is required for peer nodes in terms of MN functionality. In other words, peer nodes can be standard MIPv6 MNs. The HA can accept correspondent Binding Update messages from a peer node on behalf of the MN without arising any security issue.

Using the invention, no context transfer mechanism is required for the PMA or the MN. As described previously, a context transfer mechanism is expected to be expensive, and an operational burden for the network operator.

The Proxy Correspondent Binding Reception performed by the HA allows the MN to be able to accept correspondent binding from its peer node even if it is located in a PMIP domain network.

The invention may be implemented simply by introducing new mobility options for inclusion in mobility header messages, namely, Care-of Test Option and Correspondent Node List Option. This simplifies introduction of the invention into existing networks.

The HA can selectively activate route optimization for the communication between the MN and CN in the light of RTT measurement results, ensuring that route optimization is only performed where required.

It will be appreciated by the person of skill in the art that various modifications may be made to the above described embodiments without departing from the scope of the present invention, established by the set of claims 1-11.

## Claims

1. A method of managing binding information, on behalf of a Mobile Node, at a Home Agent in a Mobile IP network, the method comprising:
maintaining (1) a record of Correspondent Binding Reception and Correspondent Binding Registration at said Home Agent, the Correspondent Binding Reception record comprising a Home Address of the Mobile Node and a Care-of-Address of a Correspondent Node, and the Correspondent Binding Reception record comprising an IP address of the Correspondent Node and security credentials authenticating that the Home Agent can act on behalf of the Mobile Node;
in the event of the Home Agent receiving (2) a Binding Update message on behalf of the Mobile Node, updating (3) the Care of address of the Correspondent Node in the Correspondent Binding Reception record; and
in the event of the Home Agent sending (4) a Binding Update message on behalf of the Mobile Node, sending (5) the Binding Update message using the security credentials stored in the Correspondent Binding Reception record.

2. A method of managing binding information according to claim 1, further comprising, at the Home Agent, activating Route Optimization for user data packets sent between the Mobile Node and the Correspondent Node.

3. A method of managing binding information according to claim 1 or 2, further comprising:
maintaining at the Home Agent a Correspondent Node List, the Correspondent Node List comprising information selected from any of an IP address of a Correspondent Node, Route Optimization information, authorization information; and
transmitting the Correspondent Node List to a node selected from the Mobile Node and a Proxy Mobile Agent by piggybacking the information into the existing signalling message.

4. A method of managing binding information according to any one of claims 1 to 3, the method further comprising:
receiving at the Home Agent the results of a Return Routability Test between two nodes selected from the Mobile Node and a Correspondent Node, or a Proxy Mobile Agent acting on behalf of the Mobile Node and a Correspondent Node; and
on the basis of the results, determining whether to perform Route Optimization.

5. A method of managing binding information according to claim 4, wherein a Round Trip Time is measured during a procedure selected from any of:
a Care-of Test procedure between the Mobile Node and the Correspondent Node;
a Care-of Test procedure between the Proxy Mobile Agent acting on behalf of the Mobile Node and the Correspondent Node;
a Home Test procedure between the Home Agent and the Correspondent Node, a Home Registration procedure between the Home Agent and the Correspondent Node;
a Proxy Home Registration procedure between the Home Agent and the Proxy Mobile Agent; and
a Home Registration procedure between the Home Agent and the Mobile Node:

6. A method of managing binding information according to claim 4 or 5, wherein the Home Agent responds to the Return Routability Test request messages using the security credentials stored in the Correspondent Binding Reception record.

7. A method of managing binding information according to any one of claims 3 to 6, wherein the results of a Return Routability Test are sent from the Mobile Node to the Home Agent in a message comprising a Care-of Keygen Token and a measured Round Trip Time measured between the Mobile Node and the Correspondent Node.

8. A method of managing binding information according to any one of the preceding claims, wherein the security credentials are selected from the security credentials of the Mobile Node and the security credentials of a Proxy Mobile Agent acting on behalf of the Mobile Node.

9. A method of managing binding information according to any one of the preceding claims, wherein the Mobile Node is communicating with a Correspondent Node in a Proxy Mobile IP network, the method comprising, at the Home Agent, querying a database to obtain an identity of a Proxy Mobile Agent serving the Correspondent Node.

10. A method of managing binding information according to any one of the preceding claims, comprising, at one of a Mobile Node and a Proxy Mobile Agent acting on behalf of the Mobile Node, processing user data packets in a route optimized manner using a Routing Header Type 2 and a Home Address Destination Option.

11. A Home Agent (701) for use in a Mobile IP network, the Home Agent comprising:
a memory (702) for storing a record of Correspondent Binding Reception and Correspondent Binding Registration, the Correspondent Binding Reception record comprising a Home Address of a Mobile Node for which the Home Agent is acting and a Care-of-Address of a Correspondent Node, and the Correspondent Binding Reception record comprising an IP address of the Correspondent Node and security credentials authenticating that the Home Agent can act on behalf of the Mobile Node;
a receiver (703) for receiving a Binding Update message on behalf of the Mobile Node;
means (704) for updating the Care of address of the Correspondent Node in the Correspondent Binding Reception record upon receival of a Binding Update message on behalf of the Mobile Node; and
a transmitter for transmitting a Binding Update message on behalf of the Mobile Node, the message using the security credentials stored in the Correspondent Binding Reception record.

## Patentansprüche

1. Verfahren zum Verwalten von Binding-Information für einen mobilen Knoten an einem Heimat-Agenten in einem mobilen IP-Netz, wobei das Verfahren umfasst:
Pflegen (1) einer Aufzeichnung von korrespondierendem Binding-Empfang und korrespondierender Binding-Registrierung am Heimatagenten, wobei die Aufzeichnung von korrespondierendem Binding-Empfang eine Heimatadresse des mobilen Knotens und eine Care-of-Adresse eines korrespondierenden Knotens umfasst und die Aufzeichnung von korrespondierendem Binding-Empfang eine IP-Adresse des korrespondierenden Knotens und Sicherheits-Berechtigungsnachweise umfasst, die authentifizieren, dass der Heimatagent für den mobilen Knoten agieren kann;
in dem Fall, dass der Heimatagent eine Binding-Aktualisierungsnachricht für den mobilen Knoten empfängt (2), das Aktualisieren (3) der Care-of-Adresse des korrespondierenden Knotens in der Aufzeichnung von korrespondierendem Binding-Empfang; und
in dem Fall, dass der Heimatagent eine Binding-Aktualisierungsnachricht für den mobilen Knoten sendet (4), das Senden (5) der Binding-Aktualisierungsnachricht unter Verwendung der Sicherheits-Berechtigungsnachweise, die in der Aufzeichnung von korrespondierendem Binding-Empfang gespeichert sind.

2. Verfahren zum Verwalten von Binding-Information nach Anspruch 1, außerdem umfassend, dass am Heimatagenten Routenoptimierung für Benutzerdatenpakete aktiviert wird, die zwischen dem mobilen Knoten und dem korrespondierenden Knoten gesendet werden.

3. Verfahren zum Verwalten von Binding-Information nach Anspruch 1 oder 2, außerdem umfassend:
am Heimatagenten eine korrespondierende Knotenliste pflegen, wobei die korrespondierende Knotenliste Information umfasst, die aus einer von Folgenden ausgewählt wird: einer IP-Adresse eines korrespondierenden Knotens, Routenoptimierungsinformation, Genehmigungsinformation; und
Übertragen der korrespondierenden Knotenliste an einen Knoten, der aus dem mobilen Knoten und einem mobilen Proxyagenten ausgewählt wird, indem die Information im Huckepackverfahren in die bestehende Signalisierungsnachricht gebracht wird.

4. Verfahren zum Verwalten von Binding-Information nach einem der Ansprüche 1 bis 3, wobei das Verfahren außerdem umfasst:
am Heimatagenten die Ergebnisse eines Tests der Befähigung zum Rückrouten zwischen zwei Knoten empfangen, die aus den Folgenden ausgewählt werden: dem mobilen Knoten und einem korrespondierenden Knoten oder einem mobilen Proxyagenten, der für den mobilen Knoten und einen korrespondierenden Knoten agiert; und
auf der Basis der Ergebnisse das Bestimmen, ob die Routenoptimierung auszuführen ist.

5. Verfahren zum Verwalten von Binding-Information nach Anspruch 4, worin eine Umlaufzeit während einer Prozedur gemessen wird, die aus einer von Folgenden ausgewählt wird:
einer Care-of-Testprozedur zwischen dem mobilen Knoten und dem korrespondierenden Knoten;
einer Care-of-Testprozedur zwischen dem mobilen Proxyagenten, der für den mobilen Knoten agiert, und dem korrespondierenden Knoten;
einer Heimat-Testprozedur zwischen dem Heimatagenten und dem korrespondierenden Knoten, einer Heimat-Registrierprozedur zwischen dem Heimatagenten und dem korrespondierenden Knoten;
einer Proxy-Heimat-Registrierprozedur zwischen dem Heimatagenten und dem mobilen Proxyagenten; und
einer Heimat-Registrierprozedur zwischen dem Heimatagenten und dem mobilen Knoten.

6. Verfahren zum Verwalten von Binding-Information nach Anspruch 4 oder 5, worin der Heimatagent auf die Anforderungsnachrichten für den Test der Befähigung zum Rückrouten unter Verwendung der Sicherheits-Berechtigungsnachweise antwortet, die in der Aufzeichnung von korrespondierendem Binding-Empfang gespeichert sind.

7. Verfahren zum Verwalten von Binding-Information nach einem der Ansprüche 3 bis 6, worin die Ergebnisse eines Tests der Befähigung zum Rückrouten vom mobilen Knoten an den Heimatagenten in einer Nachricht gesendet werden, die ein Care-of-KeyGen-Token und eine gemessene Umlaufzeit umfasst, die zwischen dem mobilen Knoten und dem korrespondierenden Knoten gemessen wird.

8. Verfahren zum Verwalten von Binding-Information nach einem der vorhergehenden Ansprüche, worin die Sicherheits-Berechtigungsnachweise aus den Sicherheits-Berechtigungsnachweisen des mobilen Knotens und den Sicherheits-Berechtigungsnachweisen eines mobilen Proxyagenten ausgewählt werden, der für den mobilen Knoten agiert.

9. Verfahren zum Verwalten von Binding-Information nach einem der vorhergehenden Ansprüche, worin der mobile Knoten mit einem korrespondierenden Knoten in einem mobilen Proxy-IP-Netz kommuniziert, wobei das Verfahren am Heimatagenten das Abfragen einer Datenbank umfasst, um eine Kennung eines mobilen Proxyagenten zu ermitteln, der den korrespondierenden Knoten bedient.

10. Verfahren zum Verwalten von Binding-Information nach einem der vorhergehenden Ansprüche, umfassend, dass an einem eines mobilen Knotens und eines mobilen Proxyagenten, der für den mobilen Knoten agiert, Benutzerdatenpakete auf eine routenoptimierte Weise unter Verwendung eines Routing-Headers des Typs 2 und einer Heimatadressen-Zieloption verarbeitet werden.

11. Heimatagent (701) zur Verwendung in einem mobilen IP-Netz, wobei der Heimatagent umfasst:
einen Speicher (702) zum Speichern einer Aufzeichnung von korrespondierendem Binding-Empfang und korrespondierender Binding-Registrierung, wobei die Aufzeichnung von korrespondierendem Binding-Empfang eine Heimatadresse eines mobilen Knotens, für den der Heimatagent agiert, und eine Care-of-Adresse eines korrespondierenden Knotens umfasst, und die Aufzeichnung von korrespondierendem Binding-Empfang eine IP-Adresse des korrespondierenden Knotens und Sicherheits-Berechtigungsnachweise umfasst, die authentifizieren, dass der Heimatagent für den mobilen Knoten agieren kann;
einen Empfänger (703) zum Empfangen einer Binding-Aktualisierungsnachricht für den mobilen Knoten;
ein Mittel (704) zum Aktualisieren der Care-of-Adresse des korrespondierenden Knotens in der Aufzeichnung von korrespondierendem Binding-Empfang nach Empfang einer Binding-Aktualisierungsnachricht für den mobilen Knoten; und
einen Sender zum Übertragen einer Binding-Aktualisierungsnachricht für den mobilen Knoten, wobei die Nachricht die Sicherheits-Berechtigungsnachweise verwendet, die in der Aufzeichnung von korrespondierendem Binding-Empfang gespeichert sind.

## Revendications

1. Procédé de gestion d'informations de liaison, pour le compte d'un noeud mobile, au niveau d'un agent de rattachement dans un réseau IP mobile, le procédé comprenant les étapes ci-dessous consistant à :
maintenir (1) un dossier de réception de liaison de correspondant et d'enregistrement de liaison de correspondant au niveau dudit agent de rattachement, le dossier de réception de liaison de correspondant comprenant une adresse domestique du noeud mobile et une adresse d'entretien d'un noeud de correspondant, et le dossier de réception de liaison de correspondant comprenant une adresse IP du noeud de correspondant et des informations d'identification de sécurité authentifiant que l'agent de rattachement peut agir pour le compte du noeud mobile ;
dans le cas où l'agent de rattachement reçoit (2) un message de mise à jour de liaison pour le compte du noeud mobile, mettre à jour (3) l'adresse d'entretien du noeud de correspondant dans le dossier de réception de liaison de correspondant ; et
dans le cas où l'agent de rattachement envoie (4) un message de mise à jour de liaison pour le compte du noeud mobile, envoyer (5) le message de mise à jour de liaison en utilisant les informations d'identification de sécurité stockées dans le dossier de réception de liaison de correspondant.

2. Procédé de gestion d'informations de liaison selon la revendication 1, comprenant en outre, au niveau de l'agent de rattachement, l'activation d'une optimisation de route pour des paquets de données d'utilisateur envoyés entre le noeud mobile et le noeud de correspondant.

3. Procédé de gestion d'informations de liaison selon la revendication 1 ou 2, comprenant en outre les étapes ci-dessous consistant à :
maintenir, au niveau de l'agent de rattachement, une liste de noeuds de correspondant, la liste de noeuds de correspondant comprenant des informations sélectionnées à partir de l'un des éléments quelconques parmi une adresse IP d'un noeud de correspondant, des informations d'optimisation de route, et des informations d'autorisation ; et
transmettre la liste de noeuds de correspondant à un noeud sélectionné parmi le noeud mobile et un agent mobile mandataire en regroupant par piggybacking les informations dans le message de signalisation existant.

4. Procédé de gestion d'informations de liaison selon l'une quelconque des revendications 1 à 3, dans lequel le procédé comporte en outre les étapes ci-dessous consistant à :
recevoir, au niveau de l'agent de rattachement, les résultats d'un test d'aptitude au routage de renvoi entre deux noeuds sélectionnés parmi le noeud mobile et un noeud de correspondant, ou un agent mobile mandataire agissant pour le compte du noeud mobile et un noeud de correspondant ; et
sur la base des résultats, déterminer s'il convient de mettre en oeuvre une optimisation de route.

5. Procédé de gestion d'informations de liaison selon la revendication 4, dans lequel un temps de propagation aller-retour est mesuré au cours d'une procédure sélectionnée parmi l'une quelconque des procédures ci-dessous :
une procédure de test d'entretien entre le noeud mobile et le noeud de correspondant ;
une procédure de test d'entretien entre l'agent mobile mandataire agissant pour le compte du noeud mobile et le noeud de correspondant ;
une procédure de test domestique entre l'agent de rattachement et le noeud de correspondant, une procédure d'enregistrement domestique entre l'agent de rattachement et le noeud de correspondant ;
une procédure d'enregistrement domestique de mandataire entre l'agent de rattachement et l'agent mobile mandataire ; et
une procédure d'enregistrement domestique entre l'agent de rattachement et le noeud mobile.

6. Procédé de gestion d'informations de liaison selon la revendication 4 ou 5, dans lequel l'agent de rattachement répond aux messages de demande de test d'aptitude au routage de renvoi en utilisant les informations d'identification de sécurité stockées dans le dossier de réception de liaison de correspondant.

7. Procédé de gestion d'informations de liaison selon l'une quelconque des revendications 3 à 6, dans lequel les résultats d'un test d'aptitude au routage de renvoi sont envoyés du noeud mobile à l'agent de rattachement dans un message comprenant un jeton de générateur de clé d'entretien et un temps de propagation aller-retour mesuré qui est mesuré entre le noeud mobile et le noeud de correspondant.

8. Procédé de gestion d'informations de liaison selon l'une quelconque des revendications précédentes, dans lequel les informations d'identification de sécurité sont sélectionnées parmi les informations d'identification de sécurité du noeud mobile et les informations d'identification de sécurité d'un agent mobile mandataire agissant pour le compte du noeud mobile.

9. Procédé de gestion d'informations de liaison selon l'une quelconque des revendications précédentes, dans lequel le noeud mobile communique avec un noeud de correspondant dans un réseau IP mobile mandataire, le procédé comprenant, au niveau de l'agent de rattachement, l'interrogation d'une base de données en vue d'obtenir une identité d'un agent mobile mandataire desservant le noeud de correspondant.

10. Procédé de gestion d'informations de liaison selon l'une quelconque des revendications précédentes, comportant, au niveau de l'un parmi un noeud mobile et un agent mobile mandataire agissant pour le compte du noeud mobile, le traitement de paquets de données d'utilisateur, faisant appel à une optimisation de route, en utilisant un en-tête de routage de type 2 et une option de destination d'adresse domestique.

11. Agent de rattachement (701) destiné à être utilisé dans un réseau IP mobile, l'agent de rattachement comprenant :
une mémoire (702) destinée à stocker un dossier de réception de liaison de correspondant et d'enregistrement de liaison de correspondant, le dossier de réception de liaison de correspondant comprenant une adresse domestique d'un noeud mobile pour le compte duquel l'agent de rattachement agit, et une adresse d'entretien d'un noeud de correspondant, et le dossier de réception de liaison de correspondant comprenant une adresse IP du noeud de correspondant et des informations d'identification de sécurité authentifiant que l'agent de rattachement peut agir pour le compte du noeud mobile ;
un récepteur (703) destiné à recevoir un message de mise à jour de liaison pour le compte du noeud mobile ;
un moyen (704) pour mettre à jour l'adresse d'entretien du noeud de correspondant dans le dossier de réception de liaison de correspondant suite à la réception d'un message de mise à jour de liaison pour le compte du noeud mobile ; et
un émetteur pour transmettre un message de mise à jour de liaison pour le compte du noeud mobile, le message utilisant les informations d'identification de sécurité stockées dans le dossier de réception de liaison de correspondant.
